Europäisches Patentamt

European Patent Office

Office européen des brevets

(11) Veröffentlichungsnummer: **0 413 126 A1**

# (12) EUROPÄISCHE PATENTANMELDUNG

(21) Anmeldenummer: 90113037.7

(22) Anmeldetag: 07.07.90

(51) Int. Cl.5: **G11B 27/13**, G11B 15/02,
G11B 27/00, G11B 15/20

(30) Priorität: 27.07.89 DE 3924836

(43) Veröffentlichungstag der Anmeldung:
20.02.91 Patentblatt 91/08

(84) Benannte Vertragsstaaten:
DE FR GB IT

(71) Anmelder: **Blaupunkt-Werke GmbH**
**Robert-Bosch-Strasse 200**
**D-3200 Hildesheim(DE)**

(72) Erfinder: **Schochow, Karl-Peter**
**Kesslerstrasse 31**
**D-3200 Hildesheim(DE)**
Erfinder: **Hapke, Walter**
**Windmühlenstrasse 17**
**D-3200 Hildesheim(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) Steuereinrichtung für ein Kassettentonbandgerät.

(57) Bei einem Kassettentonbandgerät wird zum Wiederauffinden der zuletzt gehörten Stelle bei einer Spielunterbrechung die Laufrichtung des Tonbandes umgekehrt. Während des Rücklaufs werden von einem Wickelteller erzeugte Impulse gezählt und gespeichert. Bei einem anschließenden Vorlauf werden die gespeicherten Impulse zurückgezählt und zum Einschalten der zuvor unterbrochenen NF-Wiedergabe benutzt.

Fig. 1

EP 0 413 126 A1

## STEUEREINRICHTUNG FÜR EIN KASSETTENTONBANDGERÄT

Die Erfindung betrifft eine Steuereinrichtung für ein Kassettentonbandgerät nach dem Oberbegriff des Patentanspruchs 1.

Bei einem derartigen, beispielsweise aus der nichtvorveröffentlichten Patentanmeldung P 39 15 427.0 bekannten Kassettentonbandgerät ist ein Normallauf-Schnellauf-Schaltschieber vorgesehen, der bei der Umsteuerung von der einen in die andere Laufart eine Umkehrung der Transportrichtung des Magnetbandes bewirkt.

Von hochwertigen Kassettentonbandgeräten wird zur Bedienungserleichterung oft verlangt, daß die Tonbandkassette nach dem Ausschalten des Gerätes nicht ausgeworfen wird, sondern in Spielposition im Gerät verbleibt. Da sich das Tonband beim Abschalten des Gerätes noch um einen gewissen Betrag am Tonkopf vorbeibewegt, befindet sich die zuletzt gehörte Stelle bei einem Wiedereinschalten des Gerätes nicht mehr vor dem Tonkopf.

Der Erfindung liegt die Aufgabe zugrunde, ein gattungsgemäßes Tonbandgerät mit einer Steuereinrichtung zu versehen, welches es gestattet, den Spielbetrieb nach einer Unterbrechung an der unterbrochenen Stelle wieder aufzunehmen.

Diese Aufgabe wird erfindungsgemäß durch die im kennzeichnenden Teil des Anspruchs 1 angegebenen Maßnahmen gelöst.

Die mit der Erfindung erzielten Vorteile bestehen insbesondere darin, daß nach einer Spielunterbrechung die NF-Wiedergabe exakt an der Bandstelle erfolgt, die sich zu Beginn der Unterbrechung vor dem Tonkopf befunden hat.

Durch die in den Unteransprüchen aufgeführten Maßnahmen sind vorteilhafte Ausgestaltungen der Steuereinrichtung möglich.

Ein Ausführungsbeispiel der Erfindung ist in der Zeichnung dargestellt und wird im folgenden näher beschrieben.

Es zeigen:

Figur 1 eine prinzipielle Anordnung einer Steuerschaltung und

Figur 2 eine Darstellung des Bandlaufs während der Schaltvorgänge Abschalten und Wiedereinschalten.

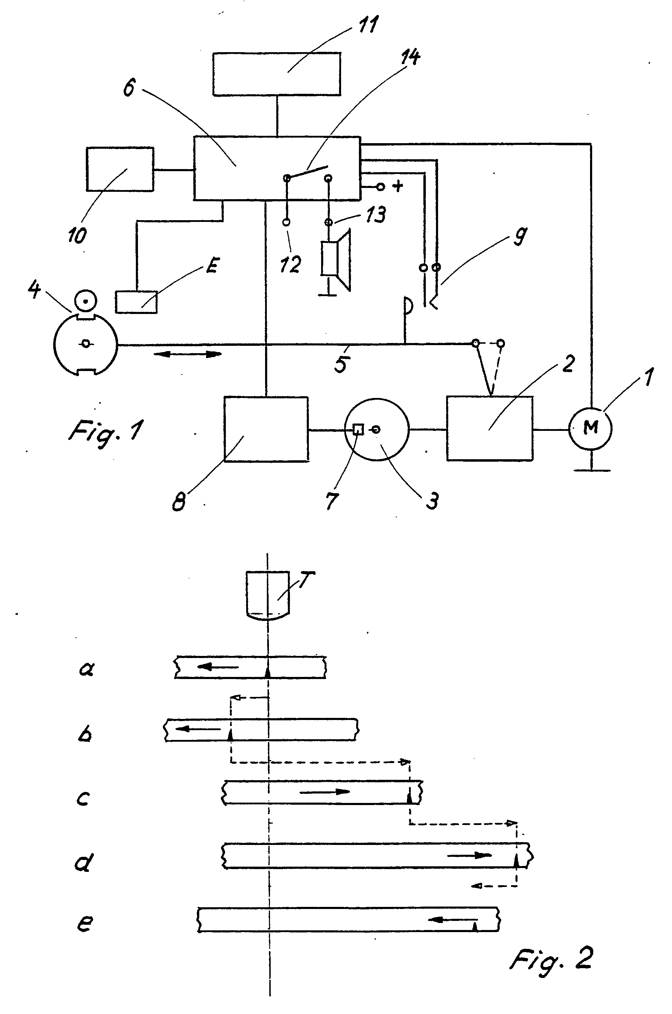

Gemäß der Figur 1 ist ein das nicht dargestellte Laufwerk des Kassettentonbandgerätes antreibender Motor 1 über ein Schaltgetriebe 2 für den Wickeltellerantrieb mit einem Wickelteller 3 koppelbar. Das Schaltgetriebe 2 ist über einen von einem Servogetriebe 4 bewegbaren Normallauf-Schnellauf-Schaltschieber 5 in die beiden Schaltpositionen normaler Vorlauf und schneller Rücklauf umschaltbar. Das Servogetriebe 4 ist mit einem Elektromagneten E versehen, der von einer elektronischen Steuerschaltung 6 betätigt wird. Der Wikkelteller 3 ist mit einer in zyklischer Folge Hell-Dunkel-Sektoren aufweisenden Scheibe verbunden, die zusammen mit einer Lichtschranke 7 und einer Abtastelektronik 8 einen Impulsgeber bildet, der bei drehendem Wikkelteller 3 elektrische Impulse an die Steuerschaltung 6 abgibt. Über einen von dem Normallauf-Schnellauf-Schaltschieber 5 angesteuerten Schalter 9 wird der Steuerschaltung 6 während der Schaltstellung schneller Rücklauf ein Schaltsignal zugeführt, welches ein Zählen und Ablegen der Impulse in einem mit der Steuerschaltung 6 verbundenen Speicher 10 bewirkt. Die mit einem Bedienteil 11 verbundene Steuerschaltung 6 ist zudem mit einem im NF-Signalweg 12/13 angeordneten Schalter 14 versehen.

Wird das Gerät im Betriebszustand Wiedergabe über das Bedienteil 11 abgeschaltet, so befindet sich das im normalen Lauf nach links transportierte Tonband gemäß Figur 2 in der Position a. In dieser Position a befindet sich eine als Pfeilspitze dargestellte gedachte Markierung direkt vor dem Tonkopf T. Gleichzeitig wird mit dem Schalter 14 die NF-Wiedergabe unterbrochen sowie mit dem Servoge triebe 4, dem Normallauf-Schnellauf-Schaltschieber 5 und dem Schaltgetriebe 2 für den Wikkeltellerantrieb eine Umschaltung der Transportrichtung des Tonbandes von normalem Vorlauf in schnellen Rücklauf eingeleitet. Bis zum Einsetzen des schnellen Rücklaufs bewegt sich das Tonband noch für eine kurze Dauer in Abspielrichtung am Tonkopf T vorbei, bevor in der Position b der schnelle Rücklauf beginnt. Da sich der Normallauf-Schnellauf-Schaltschieber 5 während der Dauer des schnellen Rücklaufs in der rechten Schaltposition befindet, bewirkt er über den Schalter 9 für die Dauer des schnellen Rücklaufs ein Zählen und ein Ablegen der von dem Wickelteller erzeugten und von der Abtastelektronik 8 gelieferten Impulse im Speicher 10. Bis zum Abschalten des Laufwerks bewegt sich das Band im schnellen Rücklauf entgegen der Abspielrichtung bis es in der Position c zum Stillstand kommt.

Beim Wiedereinschalten des Gerätes wird über das Servogetriebe 4, den Normallauf-Schnellauf-Schaltschieber 5 und über das Schaltgetriebe 2 eine Umschaltung von schnellem Rücklauf in normalen Vorlauf eingeleitet. Da sich das Schaltgetriebe 2 zunächst noch in der Schaltstellung schneller Rücklauf befindet, wird das Tonband noch für eine kurze Zeitspanne in der Rücklaufrichtung transportiert, bis es die Position d erreicht hat. Bis zu dieser Position d werden die von der Abtastelektronik 8 gelieferten Impulse gezählt und zu den im Speicher 10 abgelegten hinzuaddiert. In der Position d ändert das Band seine Laufrichtung in Normallauf und erreicht diesen in Position e. Gleichzeitig werden die in dem Speicher 10 abgelegten Impulse rückwärts gezählt. Nach dem letzten Impuls, bei dem sich die Markierung auf dem Tonband wieder vor dem Tonkopf befindet, gibt der Schalter 14 die NF-Wiedergabe frei, so daß die Wiedergabe vom Tonband nach einer Unterbrechung ohne einen Informationsverlust erfolgt. Es sei noch erwähnt, daß die zurückgelegten Wegstrecken des Tonbandes in Figur 2 nicht maßstabgerecht dargestellt sind, sondern nur das Prinzip verdeutlichen sollen.

**Ansprüche**

1. Steuereinrichtung für ein Kassettentonbandgerät mit einem die Transportrichtung des Tonbandes über einen Schaltschieber umschaltenden Schaltgetriebe,
dadurch gekennzeichnet,
daß mindestens ein Wickelteller (3) des Kassettentonbandgerätes derart ausgebildet ist, daß er in Verbindung mit einer Abtastelektronik (8) beim Drehen elektrische Impulse erzeugt, daß ein von einer Steuerschaltung (6) betätigtes Servogetriebe (4) vorgesehen ist, welches nach einem Abschalten des im Spielbetrieb befindlichen Gerätes einen Normallauf-Schnelllauf-Schaltschieber (5) von der Position Normallauf in die Position schneller Rücklauf bewegt, daß mit dem tatsächlichen Beginn des Rücklaufs die von dem Wickelteller (3) erzeugten elektrischen Impulse gezählt und in einem Speicher (10) abgelegt werden, daß nach einem erneuten Einschalten des Gerätes zunächst ein Rücklauf erfolgt, bei dem die erzeugten elektrischen Impulse zu den bereits gespeicherten addiert werden und daß mit Beginn des anschließenden Normallaufs die zuvor gespeicherten Impulse rückwärts gezählt werden und daß nach dem letzten Impuls eine mit dem Ausschalten des Gerätes eingeleitete Sperrung der NF-Wiedergabe aufgehoben wird.
2. Steuereinrichtung nach Anspruch 1,
dadurch gekennzeichnet,
daß Beginn und Ende der Impulszählung von einem vom Normallauf-Schnellauf-Schaltschieber (5) betätigbaren Schaltkontakt (9) bestimmt werden.
3. Steuereinrichtung nach Anspruch 1,
dadurch gekennzeichnet,
daß der Wickelteller (3) mit einer in zyklischer Reihenfolge Hell-Dunkel-Sektoren aufweisenden Scheibe verbunden ist, die zusammen mit einer Lichtschranke (7) und der Abtastelektronik (8) einen Impulsgeber bildet.

Fig. 1

Fig. 2

4

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-212279 (DEUTSCHE THOMSON-BRANDT GMBH) <br> * das ganze Dokument * <br> --- | 1-3 | G11B27/13 <br> G11B15/02 <br> G11B27/00 <br> G11B15/20 |
| A | EP-A-186835 (BENESCH FRED) <br> * Ansprüche 1, 2; Figuren 1-3 * <br> --- | 1, 3 | |
| A | DE-A-2746613 (VOCKENHUBER K.) <br> * Seite 11, Zeilen 6 - 10; Anspruch 1; Figur 4 * <br> --- | 1, 3 | |
| A | FR-A-2022578 (INTERNATIONAL BUSINESS MACHINES CORPORATION) <br> * Seite 3, Zeile 40 - Seite 4, Zeile 11; Anspruch 15; Figur 14 * <br> ----- | 1-3 | |

|  |
|---|
| RECHERCHIERTE SACHGEBIETE (Int. Cl.5 ) |
| G11B |

Der vorliegende Recherchenbericht wurde für alle Patentansprüche erstellt

| Recherchenort | Abschlußdatum der Recherche | Prüfer |
|---|---|---|
| BERLIN | 27 NOVEMBER 1990 | BERNAS Y. |